# EUROPÄISCHE PATENTSCHRIFT

(11) **EP 1 718 948 B1**
(45) Veröffentlichungstag und Bekanntmachung des Hinweises auf die Patenterteilung: **26.12.2012**
(21) Anmeldenummer: 05701291.6
(22) Anmeldetag: 01.02.2005
(51) Int. Cl.: G01N 1/36, G01N 1/31

(54) **VERFAHREN ZUR HERSTELLUNG FESTPHASEN-GEBUNDENER BIOREAGENZIEN**
METHOD FOR PRODUCING SOLID-PHASE BONDED BIOREAGENTS
PROCEDE DE PRODUCTION DE BIOREACTIFS LIES A DES PHASES SOLIDES

(30) Priorität: 02.02.2004 DE 102004005100
(43) Veröffentlichungstag der Anmeldung: 08.11.2006
(73) Patentinhaber: Euroimmun Medizinische Labordiagnostika AG, 23560 Lübeck (DE)
(72) Erfinder: STOCKER, Winfried, 23627 Gross Grönau (DE); RATEIKE, Martin, 23689 Pansdorf (DE); MORRIN, Markus, 19217 Carlow (DE)
(86) Internationale Anmeldenummer: PCT/EP2005/000974
(87) Internationale Veröffentlichungsnummer: WO 2005/073693

(56) Entgegenhaltungen:
- EP-A- 0 539 888
- EP-A- 1 367 380
- WO-A-00/57153
- US-A- 5 843 644
- US-A1- 2003 203 461

## Beschreibung

Die vorliegende Erfindung beschreibt ein rationelles Verfahren zur Herstellung Festphasen-gebundener Bioreagenzien als Bestandteil von Vorrichtungen für Untersuchungen an unbeweglich gemachtem biologischem Material.

### Stand der Technik

Viele Testsysteme für die klinische und medizinische Diagnostik, Veterinärmedizin, pharmazeutische und toxikologische Untersuchungen, Lebensmittel- und Umweltanalytik sowie für allgemein-biologische und biochemische Analysen basieren auf dem Einsatz Festphasen-gebundener Bioreagenzien (Festphasen-Tests). Ein klassisches Beispiel sind immunologische Testsysteme (Immunoassays), ohne die zahlreiche Bereiche der modernen Diagnostik und Analytik heutzutage nicht mehr vorstellbar sind. Ein Immunoassay ist eine Technik, bei der mittels einer immunologischen Reaktion die Anwesenheit einer Substanz gemessen wird. Charakteristisch für jede immunologische Reaktion ist eine Wechselwirkung zwischen Antikörper und Antigen. Das Resultat dieser Wechselwirkung ist ein Antikörper-Antigen-Komplex. In vitro können der Antikörper oder das korrespondierende Antigen nachgewiesen werden. Der Nachweis des Antikörpers setzt die Zugabe des entsprechenden Antigens zum Testsystem voraus und umgekehrt. Antikörper (Immunglobuline) sind eine besondere Kategorie von Proteinen (Biomoleküle). Antigene können Biomoleküle, aber auch andere chemische Verbindungen sein. Die meisten Immunoassays verlangen eine Trennung von gebundenem und freiem Antikörper und Antigen (heterogene Immunoassays oder Festphasen-Immunoassays). Diese Trennung wird dadurch bewerkstelligt, daß ein Reaktionspartner (Antikörper oder Antigen) an eine separierbare Festphase gebunden wird. Wird der Antikörper an die feste Phase gebunden oder das Antigen in Form eines Biomoleküls (z.B. Proteins, Nukleinsäure, Polysaccharids, Lectins) oder als Bestandteil einer biologischen Substanz (Gewebeschnitt, Mikroorganismus, Zelle) spricht man von einem Festphasen-gebundenen Bioreagenz.

Festphasen-Teste sind im allgemeinen leichter auszuführen, sensitiver und einfacher zu automatisieren als Flüssigphasen-Teste, bei denen sich die Reaktionspartner als auch die Reaktionsprodukte in Lösung befinden.

Bei der Herstellung Festphasen-gebundener Bioreagenzien als wesentlicher Bestandteil vieler Immundiagnostika und anderer analytischer Systeme hat man in der Vergangenheit unterschiedliche Wege beschritten.

Zur Herstellung fester Phasen für Testsysteme wurden eine Vielzahl von Materialien eingesetzt, wie z.B. Glas, Agarose, Dextran, Cellulose, Papier, Nitrocellulose, Nylon, PVDF, Latex, Polystyrol, Polyvinylchlorid, Polypropylen, Polyacrylamid, Polymerbeschichtetes Eisenoxid oder Chromdioxid, welche in den verschiedensten Gestaltungsformen verwendet wurden, wie z.B. Quadern, Folien, Streifen, Scheiben, Kugeln, Magrietpartikeln, Reaktionsgefäßen (Röhrchen, Mikrötiterplatten), Zapfen, Stäbchen, Küvetten, Filtern. Das Bioreagenz wurde adsorptiv oder kovalent an die feste Phase gebunden.

Für die Herstellung Festphasen-gebundener Bioreagenzien, wie auch für deren spätere Verwendung in analytischen Testsystemen, weisen die verschiedenen Festphasen individuelle Vor- und Nachteile auf. Dies betrifft sowohl das Material aus dem die feste Phase besteht als auch die geometrische Form der Festkörper. Unterschiede zwischen den Festphasen betreffen hauptsächlich die Bindungseigenschaften für biologische Substanzen, die Handhabbarkeit während der Immobilisierung der biologischen Substanzen und die Handhabbarkeit während der späteren Verwendung in analytischen Testsystemen. Aus diesem Grunde wurden für die Immobilisierung von Biomolekülen (z.B. Proteinen, Nukleinsäuren, Polysacchariden, Lectinen) nahezu alle bisher bekannten Festphasen unabhängig von der geometrische Form der Festkörper eingesetzt.

Demgegenüber beschränkte sich die Immobilisierung komplexer biologischer Substanzen (z.B. Gewebeschnitte, Mikroorganismen, Zellen) auf ebene (plane), quaderförmige Festkörper.

Für die Immobilisierung der festen Phasen hat man bisher die Festkörper (z. B. Reagenzgefäße, Membranstreifen, Kugeln, Magnetpartikel) direkt mit biologischen Substanzen beschichtet und die beschichteten Festkörper einzeln oder gruppenweise vor- und nachbehandelt.

Die herkömmlichen Produktionstechniken für diese Reagenzien weisen mehrere Nachteile auf, insbesondere muß man im Zusammenhang mit der Beschichtung der Oberflächen viel Ballast mitbehandeln. Man benötigt daher große Mengen an Ausgangsstoffen und Hilfsmitteln und kann nicht rationell genug produzieren. Außerdem gelingt es häufig nicht, die Bioreagenzien gleichmäß und in konstanter Qualität zu immobilisieren, wodurch die Analysen häufig gestört und die Ergebnisse erheblich gestreut werden. Die Interassay- und Interchargenreproduzierbarkeit heterogener Analysesysteme wird maßgeblich von der Qualität der verwendeten Festphasen-gebundenen Bioreagenzien beeinflußt.

Bisher wurden bei der Herstellung von Festphasen-gebundenen Bioreagenzien mit Biomolekülen diese direkt an die Oberfläche von Reaktionsgefäßen (z.B. Mikrotiterplatten, Röhrchen) gekoppelt. Dabei konnte man zwar mehrere Gefäße gleichzeitig behandeln, man mußte aber für jedes einzelne produzierte Reagenz ein ganzes (raumfüllendes) Gefäß einsetzen. Oder es wurde eine größere Zahl an Festkörpern (z.B. Kugeln, Magnetpartikel) im gemeinsamen Ansatz beschichtet. Die Festkörper mußten dann später, bei der Durchführung der Analysen, in Reagenzgefäße überführt werden.

Die Nachteile potenzieren sich noch bei der Herstellung Festphasen-gebundener Bioreagenzien mit komplexen biologischen Substanzen (z.B. Gewebeschnitte, Mikroorganismen, Zellen). Zum Beispiel wurden in der Vergangenheit Gewebeschnitte für die Diagnostik von Autoantikörpern zunächst von Hand angefertigt. Es war üblich, die Gewebeschnitte auf Standardobjektträger aus Glas zu montieren, und zwar wurde in der Regel für jeden Gewebeschnitt ein Standardobjektträger genommen. Später brachte man Gewebeschnitte nebeneinander auf und grenzte diese voneinander ab, wodurch Reaktionsfelder entstanden, so daß mehrere Proben nebeneinander auf demselben Objektträger untersucht werden konnten. Um eine größere Anzahl (kleiner) Gewebeschnitte in herkömmlicher Weise mit dem Kryotom anzufertigen, benötigte man viel Zeit. Eine Person konnte deshalb bisher an einem Tage Gewebeschnitte für höchstens 500 Analysen herstellen. Außerdem mußte man bei kommerzieller Produktion Gewebeschnitte verwerfen, die Artefakte enthielten, mitsamt den zuvor angefertigten einwandfreien Schnitten desselben Objektträgers. Die Ausschußziffer war hoch, und es war kaum vorstellbar, daß man Objektträger im Industriemaßstab mit mehr als 20 Gewebeschnitten beschichten könnte.

Es wurde auch beschrieben, in Polyacrylamid eingebettetes Gewebe zu schneiden und die Schnitte kovalent an eine Festphase zu binden (Hausen P, Dreyer C, Stain Technol 1981, 56:287-293), was aber zu einer Qualitätsminderung des verwendeten Gewebes führte.

Bei herkömmlichen cytologischen Präparaten für die Bestimmung von Antikörpern gegen Zellkerne oder Infektionserreger wurde auf jedem Reaktionsfeld eines Objektträgers eine Mikro-Zellkultur angelegt. Die Kulturbedingungen waren entsprechend schwer zu vereinheitlichen, und die Zellen wuchsen herdförmig an, mit einem zelldichten Zentrum in einer ausgedünnten Umgebung. Oder, bei Tropfpräparaten suspendierter Zelten, bildeten sich auf den Reaktionsfeldern häufig zelldichte Höfe, die ein zellarmes Zentrum umrandeten. Diese Störungen erschwerten die Auswertung der Analysen und verursachten häufig auch Fehlbestimmungen.

Die bisherige Herstellung Festphasen-gebundener Bioreagenzien mit komplexen biologischen Substanzen erfolgte oft für eine längere Zeit bei Raumtemperatur, wodurch die hierfür verwendeten Biomaterialien einem beschleunigten Zerfall und einer Zersetzung ausgesetzt waren gepaart mit einem Abfall ihrer biologischen Aktivität.

Aus wirtschaftlicher Sicht war die Herstellung Festphasen-gebundener Bioreagenzien mit komplexen biologischen Substanzen zeitaufwendig und kostenintensiv.

Später wurden sogenannte Gewebearrays (Tissue Arrays) beschrieben. Gewebearrays bestehen aus unterschiedlichen Gewebeproben, die in einem einzigen Paraffinblock zusammengefaßt sind. Diese fertigt man an, indem man dem jeweiligen Gewebeblock, z.B. einem wie üblich präparierten histologischen Paraffinblock, wie bei einer Nadelbiopsie, eine Probe in Form einer winzigen zylindrische Stanze von z.B 0,6 mm Durchmesser entnimmt und die Stanze positionsdefiniert in einen neuen Empfängerparaffinblock (Rezeptorparaffinblock) einfügt.

Diese Technik ist ursprünglich 1987 von Wan, Fortuna und Furmanski beschrieben worden (Wan WH, Fortuna MB, Furmanski P: A rapid and efficient method for testing immunohistochemical reactivity of monoclonal antibodies against multiple tissue samples simultaneously. J Immunol Methods 1987, 103:121-129). Sie publizierten eine Modifikation der Methode von Battifora, bekannt als "Sausage Block Technique" (Battifora H: The multitumor (sausage) tissue block: novel method for immunohistochemical antibody testing. Lab Invest 1986, 55:244-248). Dabei wurden Gewebestanzen in vorher im Empfängerblock gefertigte Aufnähmebohrungen gebracht. Die Technologie wurde erst richtig populär durch eine Veröffentlichung von Kononen et al. in "Nature Medicine" im Jahre 1998 (Kononen J, Bubendorf L, Kallioniemi A, Barlund M, Schraml P, Leighton S, Torhorst J, Mihatsch MJ, Sauter G, Kallioniemi OP: Tissue microarrays for high-throughput molecular profiling of tumor specimens. Nat Med 1998, 4:844-847). Bei der Herstellung von Gewebearrays wird von Sammlungen definierter, Paraffin-eingebetteter Proben von Geweben, z.B. histologischer Gewebeproben oder Tumoren, ausgegangen. Von diesem "Sammelblock" können anschließend mehrere hundert Dünnschnitte angefertigt werden. Jeder dieser Multiplex-Schnitte repräsentiert Gewebeproben von bis zu 1.000 Einzelproben. Es können beispielsweise multiple Patientenproben gemeinsam an einem Dünnschnitt auf einem Objektträger untersucht werden. Es lassen sich z.B. immunhistochemische Analysen, In-situ-Hybridisierungen und Fluoreszenz-In-situ-Hybridisierungs-Analysen für z.B. epidemiologische Studien zur Identifizierung neuer diagnostischer und prognostischer Tumormarker durchführen.

Seit der erstmaligen Beschreibung eines Gewebearrays fand diese Technik breite Anwendung in akademischen Institutionen und Biotechnologie-Unternehmen, und es würden zahlreiche Modifikationen dieser Technik und der für die Herstellung von Gewebearrays verwendeten Geräte und Verfahren in der Literatur beschrieben oder kommerzialisiert, wie z.B. die "Frozen Tumor Tissue Microarray Technology" (Schoenberg Fejzo M, Slamon DJ: Frozen tumor microarray technology for analysis of tumor RNS, DNS, and proteins. Am J Pathol 2001, 5:1645-1650) oder der "Manual Tissue Arrayer 1" und "Manual Tissue Arrayer II" (Beecher Instruments Inc.), "Advanced Tissue Arrayer" (Chemicon International) "Automated Tissue Arrayer ATA-27" (Beecher Instruments Inc.).

Die Gewebearray-Herstellung ist mit folgenden Nachteilen verbunden:
- Das Ausstanzen aus einem Donorblock und das unmittelbare Einfügen in den Rezeptorblock führt zu einer ungenauen Positionierung der Gewebeprobe innerhalb des Rezeptorblocks. Die gewünschten Gewebestrukturen befinden sich eventuell nicht an geeigneter Stelle, was zu viel Ausschuß führt;
- das Anfertigen der Dünnschnitte vom Sammelblock, welcher Proben unterschiedlicher Gewebe enthält, ist schwierig, da verschiedene Gewebe unterschiedliche Bedingungen für das Gefrierschneiden erfordern;
- die gemeinsame Verarbeitung verschieden fixierter und unfixierter Gewebe ist schwierig;
- die Ausbeute des zur Weiterverarbeitung gewonnenen Gewebes ist gering;
- der Verarbeitung ungleichmäßig im Gewebe verteilter Strukturen, z.B. Langerhans'sche Inseln der Bauchspeicheldrüse oder Glomeruli der Niere, sind Grenzen gesetzt: die Gewebestrukturen müssen ausreichend groß sein (Gewebeschnittfläche darf etwa 9 mm² nicht unterschreiten), um zu gewährleisten, daß ihre zu untersuchenden Strukturen mit ausreichender Wahrscheinlichkeit präsent sind;
- die Fixierung der Gewebeproben auf der Festphase (Objektträger) ist oft unzureichend;
- die Kombination von Gewebeproben mit anderen Bioreagenzien (Mikroorganismen, Zellen, Biomolekülen) auf der Festphase ist ohne weiteres nicht möglich.

Wegen des großen Stellenwertes von Immundiagnostika mit Festphasen-gebundenen biologischen Substanzen (Bioreagenzien) haben wir in der Vergangenheit vorwiegend an der Aufgabe gearbeitet, Testreagenzien für eine bessere Immundiagnostik zu schaffen (EUROPÄISCHE PATENTSCHRIFT 0 117 262 "Verfahren und Vorrichtungen für Untersuchungen an unbeweglich gemachtem biologischem Material").

Mit Hilfe der in dieser Patentschrift aufgezeigten Erfindung gelang es bereits im Jahre 1983, lange vor der Einführung der Gewebearray-Technik, komplexes biologisches Material an eine Festphase zu binden und es mit biochemischen Methoden rationell zu untersuchen oder es für rationelle biochemische Untersuchungen einzusetzen Die Herstellung der Festphasen-gebundenen Bioreagenzien erfolgte noch mit Hilfe eines manuellen Verfahrens, das sich aber nicht für die Serien- und Massenfertigung eignete.

Die US 2003/203 461 A1 offenbart ein Verfahren zur Reinigung von Zellen und zur Ablösung von unerwünschten Zellen von einem Trägermaterial mittels Laserstrahlung.

Die EP 1 367 380 A offenbart ein Verfahren zur automatischen Lokalisierung sowie Manipulation von Zellen in einer auf einem Objektträger angeordneten Probe unter Einsatz eines fokussierten Laserstrahls.

Die EP 0 539 888 A1 offenbart ein Verfahren zum Aufnehmen bestimmter Zellen aus einer Probe, die zuvor auf einem Objektträger aufgebracht worden war. Dabei scannt ein Detektor die Probe und speichert die Daten in einem Computer. Ein Aufnehmer nimmt dann elektronisch gesteuert solche Zellen auf, die eine bestimmte optische Eigenschaft haben..

Ähnliche Verfahren sind in der US 5,843,644 und der WO 00/57153 beschrieben.

Mit dem Ziel, diese Nachteile zu überwinden und für Mikroanalysen standardisierte Festphasen-Reagenzien kostensparend herzustellen, wurde eine neue Produktions-Technologie entwickelt.

Aufgabe der Erfindung ist es, ein verbessertes Verfahren zu schaffen, mit dem Festphasen-gebundene Bioreagenzien als Bestandteil von Vorrichtungen für Untersuchungen an unbeweglich gemachtem biologischem Material im industriellen Maßstab hergestellt werden können.

Zur Lösung dieser Aufgabe dient das Verfahren gemäß Patentanspruch 1

Die Lösung dieser Aufgabe führte zu einer neuen, vielseitigen Technologie, die bei der Präparation von Immunreagenzien und Reagenzien für viele biologische und biochemische Laboranalysen eingesetzt werden kann.

Gemäß Erfindung wurde ein neues Produktionssystem geschaffen, mit dem es gelingt Festphasen-gebundene Bioreagenzien für die rationelle Diagnostik in gleichbleibender Qualität im industriellen Maßstab zu produzieren. Mit der Erfindung kann man Reagenzien für ein umfangreiches Analysenspektrum produzieren, besonders für das klinisch-immunologische oder pathologisch-histochemische Laboratorium.

Bei der Beschreibung halten sich die Erfinder an das allgemeine Prinzip zur Herstellung Festphasen-gebundener Bioreagenzien, die beispielsweise Hauptbestandteil von Testsätzen zur Bestimmung von Autoantikörpern mittels indirekter Immunfluoreszenz sein können. Die Erfindung eignet sich aber auch für viele Anwendungen aus anderen Bereichen der Immunologie, der Histochemie, der Cytochemie, der Mikrobiologie, der Nukleinsäurediagnostik, der klinischen Chemie, der Hormonchemie, der Biologie und Biochemie.

Die Erfindung umfaßt also ein Verfahren zur industriellen Herstellung Festphasen-gebundener Bioreagenzien in Serien- und Massenfertigung, mit denen ein biologisches Material zunächst auf der Oberfläche eines oder mehrerer Träger zur Haftung gebracht wird, gekennzeichnet durch elektronisch gesteuerte Vorrichtungen, mit denen das mit biologischer Substanz beschichtete Trägermaterial anschließend am Computer virtuell fragmentiert wird, das Fragmentieren dann maschinell nachvollzogen wird und die resultierenden Fragmente schließlich vollautomatisch auf Analyseplatten, beispielsweise Objektträger, befestigt werden.

Biologische Substanzen wie beispielsweise Gewebeschnitte, Kulturzellen oder Bakterienausstriche, werden zunächst auf ein Trägermaterial, z.B. papierdünnes (0,15 mm) Glas, auf z.B. ein Deckglas, aufgebracht, das normalerweise in der Mikroskopie Verwendung findet. Das beschichtete Trägermaterial beansprucht nur wenig Platz und kann daher in flüssigem Stickstoff bei -196 °C aufbewahrt werden. Die biologische Aktivität der zur Beschichtung eingesetzten biologischen Substanzen, die als Substrate bezeichnet werden, bleibt jahrzehntelang unvermindert erhalten. So lassen sich von jedem Substrat große Chargen anfertigen und dadurch Schwankungen der Qualität verringern. Die Weiterverarbeitung des Trägermaterials zum Endprodukt kann jeder Zeit kurzfristig erfolgen.

Das mit biologischer Substanz beschichtete Trägermaterial, z.B. ein Deckglas, wird nach Entnahme aus dem Tiefkühllager auf einer mit einem Haftkleber versehenen Kunsttoff-Folie, beispielsweise in Form eines Folienrings, befestigt, wobei die biologische Substanz nicht mit der Kunststoff-Folie in Kontakt kommt:

Das Deckglas wird mit der Substanzschicht, also der Substratseite nach unten in eine Einsparung oder Schablone einer Vorrichtung gelegt, wobei der nicht beschichtete Deckglasrand aufliegt. Die Schablone dient der definierten Ausrichtung des Deckglases in Position zu Folie und Drehwinkel.

Für jedes Deckglasformat wird eine individuelle Schablone verwendet. Die Schablone hat einen schwarzen Hintergrund, wodurch das Deckglas visuell besser erkannt werden kann. Eine von zwei konzentrischen Kunststoffringen umgebene, adhäsiv wirkende Kunststoff-Folie, ein s.g. Folienring, wird so auf die mit dem Deckglas bestückte Schablone gelegt, daß das Justierloch des Folienrings über den Paßstift der Schablone paßt.

Durch Adhäsion wird das Deckglas an die Folie geheftet, wobei die unbeschichtete Seite des Deckglases auf die im Folienring befindliche Folie trifft. Der auf diese Weise hergestellte Folienring mit Substrat-bestücktem Deckglas wird mit einem Strichcode zur Identifizierung versehen und bei -40°C gelagert.

Das beschichtete Trägermaterial wird mit einer Kamera auf einem Bildschirm dargestellt. Ein in Format und Größe frei wählbares Raster wird eingeblendet und so in einem beliebigen Winkel über die einzelnen Teilflächen des Deckglases, z.B. Gewebeschnitt gelegt, daß sich eine optimale Untergliederung in jeweils mehrere Substanz-Fragmente ergibt. Die Substanz-Fragmente sind z.B. Gewebeschnitt-Fragmente. Das Trägermaterial wird daraufhin "virtuell" per Computer und Fragmentiermaschine fragmentiert. Dazu wird ein Folienring unmittelbar nach der Entnahme aus dem Kühllager auf eine Heizplatte (32°C) gelegt, wodurch eine Abscheidung von Kondenswasser auf der Folie verhindert wird. Der mit Deckglas bestückte Folienring ist ausreichend stabil und kann mehrmals dem Kühllager entnommen und wieder zurückgeführt werden. Er wird auf einer Vorrichtung, die einen Barcode-Scanner, eine Folienringkontur und einen Paßstift aufweist, exakt positioniert. Diese Vorrichtung kann in Richtung zweier Achsen (X-, Y-Achse) bewegt und um eine vertikale Achse (U-Achse) gedreht werden. Mit einem an sich bekannten Kameräsystem wird ein Bild des auf dem Folienring befindlichen und mit Substrat bestückten Deckglases aufgenommen und gescannt. Nach dem Scannen wird der Folienring wieder in das Kühllager (-40°C) gelegt, wo dieser für eine lange Zeit aufbewahrt werden kann.

Der gesamte Vorgang des Scannens benötigt wenig Zeit, wodurch das eingesetzte biologische Material nur kurzzeitig bei Raumtemperatur aufbewahrt werden muß und somit dessen Zersetzung und ein Abfall der biologischen Aktivität minimiert werden. Nach dem Scannen wird das eingescannte Bild verarbeitet. Zu diesem Zweck wird aus vielen Einzelbildern ein Gesamtbild in starker Vergrößerung zusammengesetzt. Die optische Qualität des Bildes ist sehr hoch.

Über das Bild eines Deckglases mit homogenem Substrat, z.B. Gewebeschnitt aus Leber, wird ein schachbrettartiges, orthogonales oder rautenförmiges oder dreieckiges, festes Gitter-Raster und über das Bild eines Deckglases mit heterogenem Substrat, z.B. Gewebeschnitt aus Magen oder Niere, wird ein schachbrettartiges, in Winkellage beliebiges, individuelles Gitter-Raster gelegt. Anschließend wird eine virtuelle Fragmentierung des Substrat-beschichteten Deckglases durchgeführt.

Nur qualitativ hochwertige Fragmente, z.B. Fragmente mit relevanten Gewebebezirken, werden zur Weiterverarbeitung freigegeben, übrigen Fragmente werden gekennzeichnet und später automatisch ausgesondert. Somit ist eine selektive und damit optimale Auswahl geeigneter Fragmente zeitunabhängig bezüglich der nachfolgenden Verarbeitungsschritte, möglich. Das Scannen und virtuelle Fragmentieren benötigt je Folienring eine Zeit von z.B. 2 Minuten im Falle der Verwendung eines festen Gitter-Rasters.

Die während des Scannens und virtuellen Fragmentierens ermittelten elektronischen Daten werden dem individuellen Folienring über seine Strichcode-Erkennung zugeordnet, wodurch das individuelle, virtuell fragmentierte, Substrat-bestückte Deckglas für nachfolgende Arbeitsschritte identifizierbar ist.

Das Trägermaterial (Deckglas) wird dann, im Verbund mit den biologischen Substanzen (Substrat), unter Verwendung einer Diamant-armierten Vorrichtung automatisch entlang den vorgegebenen Rasterlinien in millimetergroße Fragmente (Substratfragmente) unterteilt:

Der zur Weiterverarbeitung vorgesehene Folienring mit Substrat-beschichtetem Deckglas wird dem Kühllager entnommen.

Der Folienring wird in der Fragmentiermaschine in einer Aufnahmevorrichtung mit Folienringkontur positioniert.

Die Strichcode-Information dieses Folienrings wird an eine Fragmentiermaschine mittels eines Strichcode-Scanners übertragen.

Das mechanische Fragmentieren des Substrat-beschichteten Deckglases erfolgt mit Hilfe eines Diamanten als Schneidwerkzeug, der an einem in X-, Y- und Z-Richtung beweglichen Portal der Fragmentiermaschine über der Aufnahmevörrichtung montiert und zudem um seine eigene Achse drehbar gelagert (U-Achse) ist.' Während des Fragmentierens wird das Deckglas entsprechend dem zuvor virtuell erzeugten Gitter-Raster faktisch geritzt und gebrochen.

Das Fragmentieren nach einem festen Gitter-Raster benötigt eine Zeit von etwa 1-3 Minuten, das nach einem individuellen Gitter-Raster eine Zeit von etwa 15-20 Minuten, abhängig von der Größe des Deckglases und der Anzahl geritzter Linien.

Nach dem Fragmentieren wird das Substrat-bestückte Deckglas auf dem Folienring zwischen einer flexiblen Unterlage und einer Andruckwalze zusätzlich gerollt, um noch nicht gebrochene Substratfragmente zu brechen. Die dabei entstandenen Substratfragmente liegen aber so dicht beieinander, daß deren Kanten aneinander reiben. Um dies zu unterbinden werden die Substratfragmente durch konzentrisches Strecken der sich in dem Folienring befindlichen Folie auf Distanz gebracht. Zu diesem Zweck wird die zwischen den beiden konzentrischen Ringen geklemmte Folie nach allen Richtungen gereckt, indem der größere Ring durch Eindrücken in einen identischen Ring ersetzt wird. Man erhält dann sauber geschnittene Fragmente mit genauen Abmessungen und eine exakte Aufteilung der Substratfragmente.

Durch das Vereinzeln der Substratfragmente wird die ursprüngliche Position jedes einzelnen Substratfragmentes verändert, was eine erneute Bestimmung der geänderten Position der Substratfragmente erfordert. Hierzu wird der Folienring mit den vereinzelten Substratfragmenten nochmals mittels des Kamerasystems gescannt. Eine Bilderkennungssoftware ermöglicht die automatische Berechnung der neuen Positionen der Substratfragmente, die für deren Weiterverarbeitung von Relevanz sind. Der auf diese Weise generierte elektronische Datensatz wird dem individuellen Folienring über dessen Strichcode-Erkennung zugeordnet.

Die für jeden Folienring über seinen Strichcode abrufbaren elektronischen Daten enthalten zweckmäßigerweise folgende Informationen: Art des verwendeten biologischen Materials (Substrat), Vorseparierung, Chargen-Nummer, Substratfragment-Format, Positionierung der einzelnen Substratfragmente, Kennzeichnung der zur Weiterverarbeitung vorgesehenen bzw. ausgesonderten Substratfragmente.

Der Folienring mit den so vereinzelten Substratfragmenten wird im Kühllager bei -40°C aufbewahrt, wo dieser für eine lange Zeit gelagert werden kann.

Die Substratfragmente werden anschließend mit Bestückungsautomaten in Reagenzgefäße oder auf Reaktionsfelder von besonders konfigurierten Analyseplatten, z.B. Objektträger, geklebt. In einer Ausführung wird je Reaktionsfeld ein Fragment vorgesehen, in einer anderen Ausführung aber auch mehrere Fragmente mit unterschiedlichen Substraten nebeneinander, die ein s.g. " Substratfragment -Mosaik" bilden.

Hierzu wird der Folienring mit den Substratfragmenten dem Kühllager entnommen und auf dem Folienhalter der Bestückungsmaschine, welcher in Richtung der Y-Achse bewegbar ist, plaziert. Der Folienhalter ist im Zentrum durchgängig freigearbeitet.

Die Bestückungsmaschine wird mit Analyseplatten, also beispielsweise bedruckten Objektträgern beladen, welche auf einem Transporttablett der Maschine zugeführt werden. Das Transporttablett verfügt über einen beweglichen Seitenrand, der die Objektträger fixiert und so besser positioniert.

Es können zwei oder mehr mit Objektträgern beladene Transporttabletts von der Bestückungsmaschine alternierend verwendet werden, so daß immer eines dieser Tabletts mit neuen Objektträgern nachbestückt werden kann, was zu einer kontinuierliche Arbeitsweise führt.

Ein in Y-Richtung bewegbarer Verfahrtisch nimmt das Transporttablett mit den zu bestückenden Objektträgern auf. Die Bestückungsmaschine verfügt über einen Strichcode-Scanner, mit dessen Hilfe sie den individuellen, Substratfragment-bestückten Folienring identifizieren kann.

Ein Kamerasystem kontrolliert die Beladung des Transporttabletts mit Objektträgern, ermittelt die Feldpositionen der Objektträger und legt die Positionen auf den Objektträgern fest, welche mit Substratfragmenten bestückt werden sollen.

Die Bestückungsmaschine ist mit einer Transfereinheit ausgestattet, die aus zwei beweglichen Transportschlitten besteht, welche sich auf einer Schiene bewegen. Auf einem Transportschlitten ist ein vakuumunterstützter Saugnapf montiert, welcher sich angetrieben durch einen Schrittmotor in Richtung der X-Achse bewegen kann. Der Saugnapf ist pneumatisch unterstütz vertikal, also in Richtung der Z-Achse beweglich und drehbar ("U").

Unterhalb des in der Bestückungsmaschine angebrachten Folienringes mit der Substratfragment-bestückten Folie befindet sich eine stempelartige Vorrichtung mit einer Nadel, welche die Ablösung der Substratfragmente von der Folie unterstützt. Die Nadel stößt etwa 1-1,5 mm aus der Stempeloberfläche heraus, durchsticht die Folie von unten und unterstützt damit das Ansaugen des Substratfragmentes durch den Saugnapf von oben.

Da die Winkellage des abgelösten Substratfragmentes am Saugnapf von der z.B. orthogonalen Ausrichtung entsprechend dem zur Fragmentierung verwendeten Gitter-Raster abweichen kann, ist eine Rotationsbewegung zur parallelen Anordnung auf dem Objektträger erforderlich. Der Saugnapf wird dazu von einem Motor gedreht (U-Achse).

Der zweite sich auf der Transfereinheit der Bestückungsmaschine befindliche Transportschlitten wird Kleberschlitten genannt, und bewegt sich ebenfalls in Richtung der X-Achse. Er ist mit einer Vorrichtung ausgestattet, die eine in Richtung der Z-Achse bewegliche Klebernadel enthält, welche über einen Schlauch mit einem Klebstoffreservoir verbunden ist. Vor dem Aufbringen eines Substratfragmentes auf einen Objektträger dosiert oder verteilt die Klebernadel den im Volumen zur Substratfragment-Fläche proportional bemessenen UV-Klebstoff auf die gewählte Bestückungsposition oder Oberfläche des Objektträgers, wobei die Klebernadel mit dem Objektträger in Berührung oder in seine Nähe kommt. Unmittelbar danach wird das Substratfragment auf die Klebstoff-benetzte Stelle des Objektträgers gesetzt. Weitere Substratfragmente werden nun auf gleiche Weise zielgenau und schnell auf die Objektträger plaziert.

Die Bestückungsmaschine bestückt bis 4.000 Substratfragmente pro Stunde. Sie enthält Vorrichtungen, die der In-Prozeß-Kontrolle der durchgeführten Arbeitsschritte und der unmittelbaren Fehlerkorrektur dienen. Eine mechanische Unzulänglichkeit des Bestückungsvorganges besteht nämlich darin, daß ein Substratfragment während der Aufnahme vom Folienring seine relative Position bezogen auf das zuvor erzeugte Gitter-Raster in unbestimmter Weise verändern kann. Das hat zur Folge, daß das Substratfragment verdreht oder verschoben am Saugnapf haftet. Um den Verdrehungs- oder Verschiebegrad zu bestimmen, wird jedes Substratfragment nach Aufnahme durch den Saugnapf von einer Kontrollkamera betrachtet, die unterhalb der Überflugbahn des Substratfragmentes montiert ist.

Das an dem Saugnapf befindliche Substratfragment wird dazu von unten beleuchtet und von der Kamera abgebildet, was zu einer Momentaufnahme des Substratfragmentes führt.

Dabei werden Position und Drehwinkel des Substratfragmentes am Saugnapf exakt vermessen (X, Y, U) und in der verbleibenden Zeitspanne bis zum Absetzen auf dem Objektträger auf die erforderlichen Normwerte für die Bestückung korrigiert. Die notwendige Korrektur in X-Richtung erfolgt über die Position des Schlittens, die Korrektur in Y-Richtung über die Position des Transporttabletts auf dem der Objektträger liegt. Der gesamte Vorgang der Kontrolle des Substratfragmentes mit nachfolgender Korrektur seiner Positionierung erfolgt innerhalb einer Zeit von 16 Millisekunden während des Transports des Substratfragmentes vom Folienring zum Objektträger.

Durch den oben beschriebenen Kontrollvorgang werden auch Substratfragmente erfaßt, die unsymmetrisch, also beispielsweise an der Außenkante vom Saugnapf aufgenommen wurden. In diesem Fall besteht die Gefahr, daß der Saugnapf beim Ablegen des Substratfragmentes auf den Objektträger den von der Kleber-Nadel vorgelegten Klebstoff berührt, was zu einer Kontamination des Saugnapfes führen würde.

Derartig fehlpositionierte Substratfragmente und möglicherweise beschädigte Substratfragmente werden identifiziert und verworfen. Dies geschieht durch Rücktransport zum Folienring und Ablegen des betreffenden Substratfragmentes auf einer irrelevanten Position der Folie.

Die On-line-In-Prozeß-Kontrolle mittels Kontrollkamera führt zu einer deutlichen Fehlerminimierung bei der Bestückung der Obejektträger mit Substratfragmenten.

Ein weiteres Problem für eine fehlerfreie Bestückung der Objektträger mit Substratfrägmenten ist die prozeßbedingte Nichtmaßhaltigkeit der vorgefertigten, Kunststoff-gespritzten Objektträger, woraus eine Fehlpositionierung der Objektträger resultiert.

Um diese Fehlerquelle auszuschalten, wurde eine weitere bewegliche Kamera installiert, welche die Objektträger vor dem Bestückungsvorgang einmißt. Die nachgeschaltete Bilderkennung und -verarbeitung korrigiert die Fehlpositionierungen automatisch.

Zusätzlich wird auf diesem Wege eine Erkennung des vorgelegten Objektträgertyps und eine Kontrolle der vollständigen Belegung des Transporttabletts mit Objektträgern durchgeführt.

Die oben beschriebene Bestückungstechnologie gestattet es, Objektträger mit Substratfragmenten so zu bestücken, daß bei der späteren analytischen Anwendung gleichartige oder verschiedene Substratfragmente mit einer zu analysierenden Probe oder einem Nachweisreagenz in Kontakt gebracht werden können.

Für Einzelanalysen bestückt man die Reaktionsfelder der Objektträger mit je einem Substratfragment. Sind bei einer Probe mehrere Analyte zu untersuchen, so kann man viele unterschiedlich beschichtete Substratfragmente nebeneinander auf einem gemeinsamen Reaktionsfeld anordnen, dem s.g. Substratfragment-Mosaik, und mit Proben oder Reagenzien inkubieren.

Für das Befestigen der Substratfragmente in den Reagenzgefäßen oder auf den Objektträgern wird ein Polymerisationsklebstoff eingesetzt, der durch Bestrahlung mit ultraviolettem Licht aushärtet , ein s.g. UV-Klebstoff.

Der Objektträger mit den Substratfragmenten wird auf ein Transportband gelegt und durch eine Kammer mit UV-Röhren hindurchgefahren. Die Bestrahlung der Substratfragmente erfolgt mit ultraviolettem Licht hoher Intensität, ohne daß die darauf befindlichen biologischen Substanzen erwärmt werden. Die Leistung der UV-Röhren wird mittels eines UV Meßgerätes ständig überwacht. Die Verklebung ist einwandfrei und reproduzierbar.

Als Klebstoff wurde ein flüssiger Einkomponentenkleber gefunden, der bei Bestrahlung mit UV-Licht aushärtet, der sich leicht auftragen läßt und keine störenden Luftblasen bildet. Er polymerisiert auch bei Anwesenheit von Luftsauerstoff voll aus, so daß keine die Testreaktion störenden Monomere übrigbleiben. Nach der Aushärtung ist die Klebefuge im Bereich des sichtbaren Lichtes transparent und sie fluoresziert nicht. Die Substratfragmente liegen planparallel auf den Objektträgern, der Brechungsindex des Klebstoffes hat einen Wert zwischen dem des Glases und dem der verwendeten Plexiglas-Objektträger. Die Klebeverbindung ist über einen großen Temperaturbereich stabil (bis unter -70°C) und hält auch wäßrigen Lösungen stand, was für die Verwendung der Substratfragment-bestückten Objektträger für die Diagnostik von größter Bedeutung ist. Der ausgehärtete Klebstoff quillt nicht unter Einwirkung von Wasser und er beeinträchtigt nicht die Wechselwirkung der auf den Substratfragmenten befindlichen biologischen Substanzen mit anderen in wäßriger Lösung auf die Substratfragmente gebrachten biologischen Substanzen.

Die Erfindung ermöglicht eine Produktivitätssteigerung im Vergleich zum konventionellen Verfahren um ein Vielfaches, denn es werden Rohstoffe und Arbeitsfläche eingespart; die hergestellten Reagenzien weisen außerdem eine hohe Qualität und einen höchstmöglichen Standardisierungsgrad auf.

Ein weiterer Vorteil besteht darin, daß der beschriebene Prozeß hinsichtlich Chargen- und Substratverwechselungen sicher ist. Es sind extrem miniaturisierte Reagenzien in breiter Vielfalt und großen Stückzahlen produzierbar. Es können Reagenzien mit beliebigen Kombinationen von Biomaterialien, z.B. Gewebeschnitten, Mikroorganismen, Zellen und Biomolekülen, oder Bestandteilen von Biomaterialien, z.B. einer einzelnen Langerhans'schen Insel der Bauchspeicheldrüse oder einzelner Glomeruli der Niere, gefertigt werden. Ferner können Reagenzien mit unterschiedlich vorbehandelten Biomaterialien, z.B. fixierten und unfixierten Gefrierschnitten der Schilddrüse, produziert werden. Man kann auch Reagenzien für ein umfangreiches Analysenspektrum produzieren, besonders für die klinische und medizinische Diagnostik, Veterinärmedizin, pharmazeutische und toxikologische Untersuchungen, Lebensmittel- und Umweltanalytik sowie für allgemein-biologische und biochemische Analysen. Die Herstellung Festphasen-gebundener Bioreagenzien beinhaltet nur noch rein mechanische oder automatisierte Arbeitsschritte, die im Gegensatz zu den anspruchsvollen biologischen Präparationen keine großen Anforderungen mehr an Erfahrung und Geschick der ausführenden Techniker stellen. Sie können mit hoher Geschwindigkeit erfolgen, und die Zeitspanne, in der die wärmeempfindlichen biologischen Präparate bei Raumtemperatur gehalten werden müssen, kann auf Minuten verkürzt werden.

Die Erfindung wird nachfolgend anhand von Beispielen näher erläutert:

### Beispiel 1:

Für die Bestimmung vieler Autoantikörper werden Objektträger mit Dünnschnitten verschiedener biologischer Gewebe eingesetzt. Um histologische Substratfragment-Präparate herzustellen, wurden die Gewebeschnitte nicht unmittelbar auf Objektträger, wie allgemein üblich, sondern auf Deckgläser aufgebracht. Die Glasoberfläche wurde zuvor nach dem Verfahren gemäß EP-B1-0 117 262 mit spontan reaktiven chemischen Gruppen versehen. Diese reagierten mit Bestandteilen der Gewebeschnitte und banden sie kovalent an das Trägermaterial, was als "Aktivierungstechnik" bezeichnet wird. Dadurch werden die Gewebeschnitt fest auf der Glasoberfläche verankert, ihre Haftung steigt um mehr als das Hundertfache, und sie lösen sich während der Inkubationen nicht mehr ab. Auch die Gewebestrukturen bleiben besser erhalten, und die Resultate können sicherer beurteilt werden.

Nach dem Aufbringen und Antrocknen der Gewebeschnitte wurden die Deckgläser entsprechend der oben dargestellten Erfindung weiterverarbeitet. Auf diese Weise konnte ein Gewebeschnitt mit einem Durchmesser von 5 - 7 mm innerhalb weniger Sekunden in beispielsweise 20 Fragmente unterteilt werden, deren Flächen für jeweils einen Test ausreichen.

Bei Einsatz der oben beschriebenen Fragmentiertechnik kommt man auf über 10.000 Gewebeschnitt-Fragmente pro Tag. Lose Gewebeschnitte sind sehr empfindlich - sie schrumpfen, zerbrechen leicht und sind schwer zu handhaben. Durch ein Deckglas stabilisierte Gewebeschnitte sind dagegen verblüffend robust. Die Fragmentiertechnik bietet daher die einmalige Möglichkeit, gezielt Strukturen aus einem Gewebeverband herauszutrennen. Nur die intakten und morphologisch einwandfreien Bezirke der Gewebeschnitte mit den für die jeweilige Analyse wesentlichen Strukturen werden weiterverarbeitet, Areale minderer Qualität (Bindegewebe, Zonen mit schlecht erhaltenen Strukturen, abgestorbene Gewebebezirke, Artefakte) werden ausgesondert, sie brauchen nicht mitanalysiert zu werden und stören auch die analytische Auswertung nicht mehr. Proben und Reagenzien werden eingespart und man benötigt weniger Arbeitsfläche. Da man die Organe vor dem Anfertigen der Gewebeschnitte nicht mehr zurechttrimmen muß, werden sie besser ausgenutzt. Man kann über einen langen Zeitraum ein und dasselbe Gewebe einsetzen und die Analysen dadurch besser standardisieren. Die Gewebeschnitt-Fragmente werden mittels der oben beschriebenen Bestückungstechnik auf Reaktionsfelder von Objektträgern geklebt. Gewebeschnitte verschiedener Organe und sogar unterschiedlich fixierte Gewebeschnitte können eng nebeneinander angeordnet und mit einem einzigen Tropfen Probenflüssigkeit oder Reagenzlösung untersucht werden ("Bunte Schnitte" mit 9 und mehr Präparaten). Die Gewebeschnitte werden um etwa 0,05 mm im Objektträger versenkt, damit sie durch ein zum Schluß aufgelegtes Deckglas nicht zerquetscht werden, was bei planen Objektträgern gelegentlich vorkommt.

Mit der oben dargestellten Technik, kann man aus vielen fehlerhaften Gewebeschnitten noch jeweils mehrere erstklassige Präparate anfertigen, und es ist auch ganz einfach, große Analyseplatten, beispielsweise Objektträger mit 96 Reaktionsfeldern, gleichmäßig mit Gewebeschnitten zu bestücken: Man sucht die einwandfreien, durch das Deckglas stabilisierten Gewebeschnitt-Fragmente aus und klebt sie kontrolliert und reproduzierbar auf die Reaktionsfelder.

Histochemische Analysen lassen sich durch die entsprechend der Erfindung hergestellten Reagenzien in einem extremen und bisher nicht vorstellbaren Ausmaß miniaturisieren. Man kann einen 10mm x 1 0mm großen Gewebeschnitt innerhalb einer Minute in 400 Mikro-Fragmente unterteilen. Diese werden auf Analyseplatten geklebt, was durch die oben beschriebene automatische Bestückurigstechnik wesentlich erleichtert wird. Für zahlreiche Analysen reicht als Gewebefläche ein Quadrat von 0,5 mm Kantenlänge bei weitem aus.

### Beispiel 2:

Für die Bestimmung von Antikörpern gegen Zellkerne oder gegen Infektionserreger im Serum von Patienten wurden Zellrasen oder Zellausstriche hergestellt.

Adhärent wachsende, in Kultur gehaltene Zellen wurden großflächig auf große Deckgläser aufgetragen. Für die Bestimmung der Zellkern-Antikörper setzte man die Zellen nativ ein, für die Infektions-Serologie infizierte man sie mit verschiedenen definierten Virus-Stämmen. Sobald die Zellen angewachsen waren und ggf. die gewünschte Menge Virus-Antigene exprimiert hatten, wurden die Deckgläser entsprechend den Präparationsvorschriften in geeignete Wasch- und Fixierlösungen getaucht und getrocknet. In Suspension wachsende Virus-infizierte Zellen, Bakterien oder Parasiten (Treponema pallidum, Borrelia burgdorferi, Toxoplasma gondii) wurden auf Polylysin-beschichtete Deckgläser ausgestrichen oder aufgetragen und ebenfalls fixiert und getrocknet. Danach wurden die Deckgläser entsprechend der oben beschriebenen Erfindung fragmentiert. Die Fragmente wurden auf Reaktionsfelder von Objektträgern geklebt.

Nach diesem Verfahren wird nahezu die gesamte Fläche der Deckgläser ausgenutzt und zu Substratfragmenten verarbeitet. Man erhält standardisierte cytologische Präparate, bei denen die Zellen besonders gleichmäßig verteilt sind, da sie einem einheitlichen Zellrasen oder einem einheitlichen Ausstrich entnommen wurden. Auch bei cytologischen Substratfragment-Präparaten besteht die Möglichkeit, die Analysen zu miniaturisieren und Mosaiken für die Untersuchung von Antikörper-Profilen anzufertigen.

Mit dem erfindungsgemäßen Verfahren können die Eigenschaften des untersuchten Gewebes auf direkte Weise erkannt werden, wenn jedes Fragment mit einem anderen Reagenz inkubiert worden ist, oder das Gewebe kann als Substrat eingesetzt werden (indirektes Verfahren), um Proteine (z. B. Antikörper, Antigene, Enzyme, Rezeptoren), Nukleinsäuren (z.B. DNS, RNS), Biomoleküle oder Molekülgruppen (z.B. Zuckerreste), oder Substanzen im Gewebe zu identifizieren, welche mit dem Substrat reagieren, z.B. Antikörper, Antigene, Liganden, DNS/RNS, Lektine.

Alternativ zu einem Gewebe können auch Zellen oder Mikroroganismen eingesetzt werden.

## Patentansprüche

1. Verfahren zur Herstellung Festphasen-gebundener Bioreagenzien als Bestandteil von Vorrichtungen für Untersuchungen an unbeweglich gemachtem biologischem Material,
wobei von einem Gewebe angefertigte Schnitte oder eine beliebige biologischen Substanz wie Zellen oder Mikroorganismen auf eine teilbare Oberfläche als Festphase überführt werden;
wobei von der teilbare Oberfläche zunächst ein elektronisches Bild erzeugt wird;
wobei die Festphase zur Minimierung der Verringerung der biologischen Aktivität gekühlt gelagert wird;
wobei das elektronische Bild der Festphase mit Hilfe eines Computers virtuell fragmentiert und das Fragmentieren der teilbaren Oberfläche mit der biologischen Substanz dann maschinell nachvollzogen wird;
wobei die Fragmente schließlich in industriellem Maßstab vollautomatisch auf Analyseplatte befestigt werden;
wobei entwerden nach dem Befestigen der Fragmente auf den Reaktionsfeldern von Objektträgern jedes Feld mit einem anderen Reagenz inkubiert wird, so daß die Eigenschaften des untersuchten Gewebes oder der biologischen Substanz erkannt werden können, oder
wobei das Gewebe oder die biologische Substanz als Substrat eingesetzt werden kann, um Substanzen zu identifizieren, welche mit dem Substrat reagieren, oder
wobei Fragmente verschiedener Gewebe oder biologischer Substanzen als Substratfragment-Mosaik auf einem Reaktionsfeld eingesetzt werden können, um gleichzeitig verschiedene Substanzen zu identifizieren, welche mit den Substraten reagieren.

2. Verfahren nach Anspruch 1, **dadurch gekennzeichnet, daß** beim virtuellen Fragmentieren ein Gitter über das Bild der Festphase gelegt und solche Bereiche ausgesondert werden, die bestimmte vorgegebene Kriterien nicht erfüllen.

3. Verfahren nach Anspruch 1 oder 2, **dadurch gekennzeichnet, daß** die Koordinaten der nicht ausgesonderten Fragmente gespeichert werden.

## Claims

1. A method for manufacturing solid-phase bound bio-reagents as a component of apparatuses for investigations on immobilized biological material,
wherein sections made from a tissue or any biological substance like cells or microorganisms are transferred onto a divisible surface as the solid phase;
wherein of said divisible surface, first an electronic image is generated; wherein said solid phase is stored refrigerated in order to minimize reduction in biological activity;
wherein said electronic image of said solid phase is virtually fragmented using a computer and fragmentation of said divisible surface with said biological substance is then mechanically reproduced;
wherein eventually said fragments are fully automatically fixed on analysis plates on an industrial scale;
wherein either following fixing of said fragments on the reaction fields of object slides, each field is incubated with a different reagent, so that the characteristics of the tissue or the biological substance investigated can be detected, or
wherein said tissue or said biological substance can be used as a substrate in order to identify substances reacting with said substrate, or
wherein fragments of various tissues or biological substances can be used as a substrate fragment mosaic on a reaction field in order to simultaneously identify various substances reacting with said substrates.

2. The method according to claim 1, **characterized in that** upon virtual fragmenting, a grid is positioned over said image of said solid phase, and such areas are eliminated, which do not fulfill certain predetermined criteria.

3. The method according to claims 1 or 2, **characterized in that** the coordinates of the non-eliminated fragments are saved.

## Revendications

1. Procédé destiné à la préparation de réactifs biologiques couplés à la phase solide en tant qu'élément de dispositifs destinés aux analyses de matériaux biologiques immobilisés,
dans lequel les coupes réalisées à partir d'un tissu ou d'une substance biologique quelconque, telle que des cellules ou des micro-organismes, sont transférées sur une surface divisible comme phase solide;
dans lequel, d'abord, une image électronique de ladite surface divisible est générée;
dans lequel ladite phase solide est conservée au frais afin de minimiser la réduction de l'activité biologique;
dans lequel ladite image électronique de ladite phase solide est fragmentée virtuellement au moyen d'un ordinateur et ladite fragmentation de ladite surface divisible portant ladite substance biologique est réitérée ensuite au moyen des appareils;
dans lequel les fragments obtenus sont ensuite fixés, à l'échelle industrielle, de manière entièrement automatisée sur des plaques d'analyse;
dans lequel soit chaque puits de lame porte-objet est incubé d'un autre réactif, après avoir fixé lesdits fragments sur les puits de réaction des lames porte-objet, de manière à ce que les propriétés du tissu analysé ou de la substance biologique puissent être identifiées soit
dans lequel ledit tissu ou ladite substance est utilisé comme substrat afin d'identifier les substances qui réagissent avec ledit substrat ou
dans lequel les fragments de divers tissus ou substances biologiques peuvent être utilisés comme mosaïque de fragments de substrat dans un puits de réaction afin d'identifier simultanément plusieurs substances différentes qui réagissent avec les substrats.

2. Procédé selon la revendication 1, caractérisé en ceci que lors de la fragmentation virtuelle, une grille est superposée sur ladite image de ladite phase solide et de telles zones sont éliminées qui ne satisfont pas aux critères définis.

3. Procédé selon la revendication 1 ou 2, caractérisé en ceci que les coordonnées des fragments non-éliminés sont enregistrées.
